**Europäisches Patentamt**

**European Patent Office**

**Office européen des brevets**

(19)

(11) Veröffentlichungsnummer: **0 174 508**
**B1**

(12) **EUROPÄISCHE PATENTSCHRIFT**

(45) Veröffentlichungstag der Patentschrift: **03.10.90**

(51) Int. Cl.⁵: **G 01 B 3/06**

(21) Anmeldenummer: **85110100.6**

(22) Anmeldetag: **12.08.85**

(54) Beschlag für einen Gliedermassstab.

(30) Priorität: **13.08.84 DE 3429771**

(43) Veröffentlichungstag der Anmeldung:
**19.03.86 Patentblatt 86/12**

(45) Bekanntmachung des Hinweises auf die
Patenterteilung:
**03.10.90 Patentblatt 90/40**

(84) Benannte Vertragsstaaten:
**AT BE CH DE FR GB IT LI LU NL SE**

(56) Entgegenhaltungen:
**BE-A- 489 309**
**BE-A- 775 740**
**DE-A-2 449 877**

(73) Patentinhaber: **Schwalm, Klaus-Peter**
**Am Richtpfad 5**
**D-5990 Altena 1 (DE)**

(72) Erfinder: **Schwalm, Klaus-Peter**
**Am Richtpfad 5**
**D-5990 Altena 1 (DE)**

(74) Vertreter: **Abitz, Walter, Dr.-Ing. et al**
**Abitz, Morf, Gritschneder, Freiherr von**
**Wittgenstein Postfach 86 01 09**
**D-8000 München 86 (DE)**

Courier Press, Leamington Spa, England.

## Beschreibung

Die Erfindung betrifft einen Beschlag für einen Gliedermaßstab in Form eines Metallblättchens, das an den jeweils miteinander gelenkig zu verbindenden Enden der Gelenkglieder des Maßstabes angebracht wird. Um ein Einrasten der Gelenkglieder in der geöffneten und der zusammengelegten Form des Gliedermaßstabes zu erreichen, ist der Beschlag des einen der beiden Gelenkglieder mit Erhebungen oder Vertiefungen versehen, die mit entsprechenden Vertiefungen bzw. Erhebungen des Beschlages des anderen Gelenkgliedes ineinandergreifen.

Üblicherweise werden für die beiden miteinander zu verbindenden Gelenkglieder jeweils unterschiedlich ausgebildete Beschläge verwendet, die in Längsrichtung und quer dazu spiegelsymmetrisch ausgebildet sind, wobei sich diese beiden Spiegelungsachsen in einem Punkt schneiden, der zugleich der Mittelpunkt einer Öffnung für den Durchtritt des Niet ist, der die beiden Gelenkglieder verbindet.

Aus der BE—A—775 740 ist es bekannt, Beschläge für einen Gliedermaßstab so auszubilden, daß für die jeweils zu verbindenden Glieder identische Beschläge verwendet werden können. Die Beschläge weisen dazu zwei gegenüberliegende Reihen von abwechselnden Erhöhungen und Vertiefungen auf, wobei jeweils eine Erhöhung einer Vertiefung der anderen Reihe gegenüberliegt. Bei diesen Beschlägen rasten die Glieder nur in der zusammengefalteten und vollständig geöffneten Stellung ein. Es wird in diesem Dokument angegeben, daß andere Formen, Anordnungen und Anzahlen der Vertiefungen und Erhöhungen möglich seien, vorausgesetzt, daß sie symmetrisch zur Drehachse liegen.

Aus der BE—A—489 309 und der DE—A—24 49 877 sind Beschläge für Gliedermaßstäbe bekannt, die auch in der 90°-Stellung einrasten. Der Beschlag für das eine Glied weist dazu vier rechtwinklig zueinander angeordnete Erhöhungen und der des anderen vier rechtwinklig zueinander angeordnete Vertiefungen auf, so daß zwei verschiedene jedoch formschlüssig ineinander passende Beschläge verwendet werden müssen.

Die im Anspruch 1, angegebene Erfindung löst die Aufgabe, einen Beschlag für einen Gliedermaßstab so auszubilden, daß für die miteinander zu verbindenden Glieder jeweils identische Beschläge verwendet werden können und die Glieder auch rechtwinklig zueinander einrasten.

Dadurch, daß nur eine Art von Beschlägen erforderlich ist, vereinfacht sich die Herstellung des Gliedermaßstabes.

Zur Erhöhung der Schnappwirkung beim Einrasten der beiden Gelenkglieder in den verschiedenen Stellungen besteht der erfindungsgemäße Beschlag vorzugsweise aus gehärtetem Stahlblech oder Federstahl. Der Beschlag kann jedoch auch aus normalem Blech, Stahlblech, Edelstahlblech oder aus Kunststoff bestehen.

Vorzugsweise weist der Beschlag ferner Krallen auf, mit denen er auf das Material, z.B. Holz, der Gelenkglieder gedrückt und darin befestigt wird. Die Art und die Anordnung der Krallen können verschieden sein, z.B. Rundkrallen, Vierkantkrallen oder Dreikantkrallen. Bei der Befestigung des Beschlags mittels Krallen ergibt sich als Vorteil, daß sie auf den schmalen Flächen der Gelenkglieder nicht zu sehen sind und dadurch die gesamte seitliche, durch die schmalen Flächen der Gelenkglieder gebildete Fläche als Werbefläche oder für sonstige Aufschriften zur Verfügung steht.

Der Beschlag kann jedoch auch in der herkömmlichen Weise auf den Gelenkgliedern befestigt werden, z.B., indem er die Schmalseiten der Gelenkglieder ganz oder teilweise umfaßt.

Ausführungsbeispiele der Erfindung werden nachfolgend anhand der Zeichnung näher erläutert. Es zeigen:

Fig. 1 in Draufsicht den Beschlag für Gliedermaßstäbe mit insgesamt vier erhöhten Flächen und vier vertieften Flächen und

Fig. 2 den Beschlag im Schnitt nach II—II von Fig. 2.

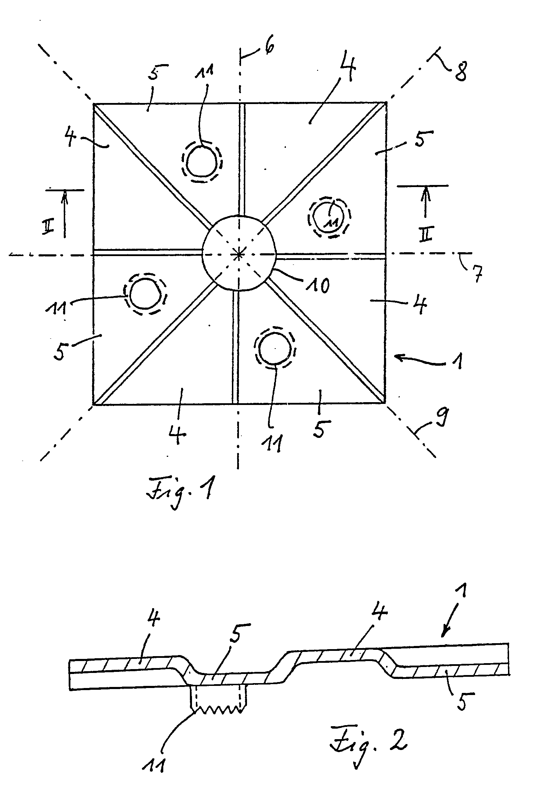

Der Beschlag von Fig. 1 besteht aus einem quadratischen Metallblättchen 1. Die quadratische Form ist nicht wesentlich, und das Metallblättchen kann auch Rechteckform besitzen. Das Metallblättchen 1 wird durch zwei Geraden 6, 7, die rechtwinklig zueinander und parallel zu den Seitenlinien des Quadrates verlaufen, und die Winkelhalbierenden 8, 9 dazu in acht gleichgroße Sektoren mit einem Datenabwinkel von 45° unterteilt. Sich diagonal gegenüberliegende Sektoren weisen Erhöhungen 4 bzw. Vertiefungen 5 auf.

Die Form des Metallblättchens 1 ist hinsichtlich der Erhöhungen 4 und der Vertiefungen 5 in der Weise symmetrisch bezüglich der beiden Geraden 6 und 7 und oder Winkelhalbierenden 8, 9, daß diejenigen Sektoren eine Erhöhung 4 sind, die zu einem Sektor symmetrisch liegen, der eine Vertiefung 5 ist. Dies läßt sich auch so ausdrükken, daß das Metallblättchen 1 hinsichtlich des Merkmals der Erhöhungen 4 und Vertiefungen 5 antisymmetrisch bezüglich der beiden Geraden 6 und 7 und der Winkelhalbierenden 8, 9 ausgebildet ist.

Das Metallblättchen 1 wird mittels Krallen 11, die sich nach unten erstrecken, und die in das Material der Gelenkglieder hineingedrückt werden, an den Gelenkgliedern befestigt. In der Mitte des Metallblättchens 1 befindet sich eine Bohrung 10, durch die sich der Niet erstreckt, der die beiden Gelenkglieder gelenkig miteinander verbindet. Im allgemeinen erstreckt sich dieser Niet durch die Gelenkglieder hindurch und ist auf den den Beschlägen gegenüberliegenden Flächen der Gelenkglieder umgebogen. Es ist jedoch auch möglich, nur die Beschläge durch den Niet zu verbinden und die beiden Gelenkglieder dann durch ihre Befestigung an den Beschlägen miteinander gelenkig zu verbinden. Die Niete können Voll- oder Hohlniete sein.

Der erfindungsgemäße Beschlag kann in verschiedenen Größen und Materialstärken hergestellt werden. Seine Oberfläche kann blank sein, oder er kann jede Art von Oberflächenveredelung oder Färbung besitzen. Er eignet sich für Gliedermaßstäbe aus jedem Material, insbesondere Holz, Kunststoff oder Metall. Bei Metall ergibt sich die zusätzliche Möglichkeit, die Erhöhungen 4 und Vertiefungen 5 aus dem Material der Gelenkglieder selbst herzustellen, so daß der Beschlag und die Gelenkglieder einteilig sind.

Da der erfindungsgemäße Beschlag wesentlich kürzer ausgebildet werden kann als die herkömmlichen Beschläge, kann auf die dadurch freiwerdende Fläche der Gelenkglieder eine Gradeinteilung aufgedruckt werden.

Die Beschläge können entweder unmittelbar auf das Holz der Gelenkglieder aufgedrückt werden oder in den Gelenkgliedern kann eine Ausfräsung vorhanden sein, die den Beschlag aufnimmt. Die Tiefe der Ausfräsung entspricht im allgemeinen der Stärke des Materials des Metallblättchens 1.

Selbstverständlich bestehen bezüglich der Gesamtlänge des Gliedermaßstabes keine Beschränkungen, und die Beschläge sind für Gliedermaßstäbe jeglicher Länge, z.B. 1 m, 2 m, 3 m oder 4 m Länge geeignet und auch für andere Meßeinheiten, z.B. Zoll.

Die Erhöhungen 4 und die Vertiefungen 5 müssen nicht die in den Figuren 1 und 2 dargestellten Formen aufweisen. Innerhalb der Erhöhungen 4 können z.B. Aussparungen oder kleinere Vertiefungen vorgesehen sein, da dadurch das Einrasten nicht beeinträchtigt wird, das in erster Linie von den Begrenzungen der Erhöhungen 4 und Vertiefungen 5 bewirkt wird.

Bei einer Stärke des Metallblättchens 1 von 0,25 bis 0,3 mm beträgt der Höhenunterschied zwischen den Erhöhungen 4 und den Vertiefungen 5 etwa 0,4 bis 0,5 mm. Vorzugsweise ist der Höhenunterschied etwa das 1,5fache der Stärke des Metallblättchens 1.

Der erfindungsgemäße Beschlag läßt sich ohne Schwierigkeiten auf einer Exzenterpresse mit Folgewerkzeug herstellen.

**Patentansprüche**

1. Beschlag für einen Gliedermaßstab in Form eines Metallblättchens (1), das an den jeweils miteinander gelenkig zu verbindenden Enden der Gelenkglieder des Maßstabes angebracht wird und Erhebungen (4) und Vertiefungen (5) aufweist, damit die Gelenkglieder bei geöffnetem und zusammengelegtem Maßstab einrasten, wobei die Erhöhungen (4) zu den Vertiefungen (5) symmetrisch bezüglich zweier Geraden (6, 7) liegen, die in der Ebene des Metallblättchens (1) und rechtwinklig zueinander liegen und deren Schnittpunkt mit dem vorgesehenen Drehpunkt der zu verbindenden Gelenkglieder zusammenfällt, dadurch gekennzeichnet, daß die Erhöhungen (4) zu den Vertiefungen (5) ferner symmetrisch bezüglich den Winkelhalbierenden (8, 9) der von den beiden Geraden (6, 7) gebildeten rechten Winkel liegen und daß die Erhöhungen und Vertiefungen von Geraden begrenzt werden, die sich im Drehpunkt unter einem Winkel von 45° schneiden.

2. Beschlag nach einem der Ansprüche 1 oder 2, dadurch gekennzeichnet, daß er aus gehärtetem Stahlblech oder Federstahl besteht.

3. Beschlag nach einem der Ansprüche 1 bis 3, dadurch gekennzeichnet, daß er in der Mitte eine Bohrung (10) für den die Gelenkglieder verbindenden Niet aufweist und daß Krallen (11) zur Verbindung des Beschlages mit den Gelenkgliedern vorgesehen sind.

**Revendications**

1. Ferrure pour un mètre pliant, se présentant sous la forme d'une lamelle métallique (1), qui est fixée aux extrémités, destinées à être assemblées les unes aux autres d'une manière articulée, des éléments articulés du mètre pliant, et qui présente des protubérances (4) et des renfoncements (5), de façon que les éléments articulés s'encliquettent quand le mètre pliant est ouvert et replié, les protubérances (4) étant disposées, par rapport aux renfoncements (5), symétriquement par rapport à deux droites (6, 7), qui se trouvent dans le plan de la lamelle métallique (1) et sont perpendiculaires l'une à l'autre, et dont le point d'intersection coïncide avec le centre de rotation prévu des éléments articulés à assembler, caractérisée en ce que les protubérances (4) sont en outre symétriques des renfoncements (5) par rapport aux bissectrices (8, 9) des angles droits formés par les deux droites (6, 7), et que les protubérances et les renfoncements sont limités par des droites qui se coupent au centre de rotation selon un angle de 45°.

2. Ferrure selon l'une des revendications 1 ou 2, caractérisée en ce qu'elle est constituée d'une tôle d'acier trempé ou d'acier à ressort.

3. Ferrure selon l'une des revendications 1 à 3, caractérisée en ce qu'elle présente en son milieu un trou (10) des destiné au rivet assemblant les éléments articulés, et que des crampons (11) sont prévus pour assurer l'assemblage de la ferrure avec les éléments articulés.

**Claims**

1. Ironwork for a folding ruler in the form of a metal platelet (1) provided at the ruler link ends to be hinged one to the other and having elevations (4) and depressions (5) so that the link members engage in unfolded and folded condition of the ruler, said elevations (4) being disposed with respect to the depressions (5) symmetrically relative to two straight lines (6, 7) which extend in the plane of the metal platelet (1) and are disposed at right angles relative to each other, and whose point of intersection coincides with the contemplated center of rotation of the link members to be connected, characterized in that the elevations (4) are disposed symmetrical to the depressions (5) with respect to the median lines (8, 9) bisecting the right angle formed by the two straight lines (6, 7), and that the elevations (4) and depressions (5) are confined by straight lines intersecting at the point of rotation at an angle of 45°.

2. Ironwork according to claim 1, characterized in that it consists of hardened sheet steel or spring steel.

3. Ironwork according to one of claims 1 and 2, characterized in that in the center it has a bore (10) for the rivet connecting the link members, and that claws (11) are provided for fastening the ironwork to the link members.

Fig. 1

Fig. 2